# EUROPEAN PATENT APPLICATION

(11) **EP 1 478 118 A1**
(43) Date of publication of application: **17.11.2004**
(21) Application number: 04252626.9
(22) Date of filing: 05.05.2004
(51) Int. Cl.: H04L 1/18

(54) **Method of mapping data for uplink transmission in communication systems**

(30) Priority: 16.05.2003 US 438930
(71) Applicant: LUCENT TECHNOLOGIES INC., Murray Hill, New Jersey 07974-0636 (US)
(72) Inventor: Cheng, Fang-Chen, Randolph, NJ 07869 (US); Liu, Jung-Tao, Randolph, NJ 07869 (US); Hu, Teck H., Budd Lake, NJ 07828 (US)
(74) Representative: Watts, Christopher Malcolm Kelway, Dr.

(57) **Abstract**

A method of mapping data for uplink transmission in a communication system maps data to a transport channel for uplink transmission in accordance with a selected transmission mode for uplink transmission. In the method, a transmission parameter may be extracted from a received signaling message, and a transmission mode for uplink transmission selected based on the extracted transmission parameter. The data, which may be high data rate uplink data, may me mapped from logical channels in a MAC layer to transport channels in a physical layer for transmission on the uplink. The transmission on the uplink may be performed from one of an autonomous transmission mode and a scheduled transmission mode, and the transmission parameter may be at least one of a priority indication parameter related to class priority of a service class of data to be transmitted on the uplink, and a radio channel condition.

## Description

### BACKGROUND OF THE INVENTION

### Field of the Invention

The present invention generally relates to mapping data to a transport channel for uplink transmission in a communication system.

### Description of Related Art

Expanded efforts are underway to support the evolution of the Universal Mobile Telecommunications System (UMTS) standard, which describes a network infrastructure implementing a next generation Wideband Code Division Multiple Access (W-CDMA) air interface technology. A UMTS typically includes a radio access network, referred to as a UMTS terrestrial radio access network (UTRAN). The UTRAN may interface with a variety of separate core networks (CN). The core networks in turn may communicate with other external networks (ISDN/PSDN, etc.) to pass information to and from a plurality of wireless users, or user equipments (UEs), that are served by radio network controllers (RNCs) and base transceiver stations (BTSs, also referred to as Node Bs), within the UTRAN, for example.

The UMTS standard has introduced several advanced technologies as part of the High Speed Downlink Packet Access (HSDPA) specification. An aspect in all of these enabling technologies is to ensure that any associated control information is carried in an efficient manner. Certain advanced or enabling technologies may include fast scheduling, Adaptive Modulation and Coding (AMC) and Hybrid Automatic Repeat Request (HARQ) technologies. These technologies have been introduced in an effort to improve overall system capacity. In general, a scheduler or scheduling function at a Node B (base station) selects a UE (mobile station) for transmission at a given time, and adaptive modulation and coding allows selection of the appropriate transport format (modulation and coding) for the current channel conditions seen by the UE.

AMC technologies enable a selection of a data rate and a transmission format (i.e., modulation level and channel coding rate) that best "suits" the scheduled user's prevailing channel conditions. Delays and measurement errors result in degraded performance from AMC.

HARQ allows combining of the original transmission with the new transmission, rather than to discard the original transmission. This may greatly improve the probability of correct decoding of the packet. The word "hybrid" in HARQ indicates that Forward Error Correction (FEC) techniques have been used in addition to ARQ techniques. Accordingly, HARQ helps to ensure that transmissions resulting in unsuccessful decoding, by themselves, are not wasted.

While much of the standardization to date has focused on the downlink (forward link from Node B/base station to UE/mobile station), similar enhancements are now being considered for the uplink (reverse link). Further evolution of 3G standards include enhanced uplink features to support high-speed reverse link packet access (uplink from mobile station to base station). Many of the techniques used in the forward link (i.e., fast scheduling, AMC, HARQ, etc.) may also be usable on the reverse link, so as to improve data rates and system capacity, for example

One set of issues being addressed by the 3rd Generation Partnership Project (3GPP), a body which drafts technical specifications for the UMTS standard and other cellular technologies, includes design considerations for the medium access control (MAC) entity so as to support high-speed enhancements in the uplink (UE to Node B). MAC is a protocol that resides at the RNC in the UTRAN and at the UE. For high speed downlink packet access (HSDPA) features in UMTS, an enhanced and separated MAC entity has been developed, referred to as "MAC-hs". In UMTS, the MAC performs many functions that include, for example, the ability to map logical channels from the upper layers (OSI Layers 3-7) onto transport channels that are then sent to the Node B, priority handling between data flows at a UE, control of High Speed Downlink Shared Channel (HS-DSCH) transmission and reception including support of HARQ, etc. In other words, the MAC manages, and performs error control, for different types of circuit-switched types of channels, i.e., Dedicated Channels (DCH), Forward Access Channels (FACH), Common Packet Channels (CPCH), etc., as is known.

Uplink data rate varies with time and relates to the radio channel condition. Rapid radio channel variations, such a may arise in high speed data environments, for example, typically require a set of sophisticated protocols to respond smartly to channel variations. In the current UTRAN configuration, error control by retransmission and sharing access control schemes for uplink data transmission are located at the RNC. For high speed data, the process time of error control by retransmission and sharing access control through RNC is too long to react the channel variations, since an uplink transmission is sent from UE to Node-B, decoded at the Node B and then sent on to the RNC. Thus, new error control and sharing access control functionalities may need to be added at the Node B to expedite error control and traffic management, for example, in response to fast channel variations.

### SUMMARY OF THE INVENTION

Exemplary embodiments of the present invention are directed to a method of mapping data for uplink transmission in a communication system, where data is mapped to a transport channel for uplink transmission in accordance with a selected transmission mode. The method may incorporate a functional MAC protocol design to effectively manage data traffic for uplink transmission in the system.

In the method, a transmission parameter may be extracted from a received signaling message, and a transmission mode for uplink transmission selected based on the extracted transmission parameter. The data, which may be high data rate uplink data, may me mapped from logical channels in a MAC layer to transport channels in a physical layer for transmission on the uplink. The transmission on the uplink may be performed from any one of several transmission modes, such as an autonomous transmission mode or a scheduled transmission mode, and the transmission parameter may be at least one of a priority indication parameter related to class priority of a service class of data to be transmitted on the uplink, and a radio channel condition.

### BRIEF DESCRIPTION OF THE DRAWINGS

Exemplary embodiments of the present invention will become more fully understood from the detailed description given herein below and the accompanying drawings, wherein like elements are represented by like reference numerals, which are given by way of illustration only and thus do not limit the exemplary embodiments of the present invention and wherein:

FIG. 1 illustrates a high-level diagram of the UMTS architecture, in accordance with an exemplary embodiment of the invention.

FIG. 2 is a flow diagram illustrating a method of mapping data in accordance with an exemplary embodiment of the invention.

FIG. 3 illustrates medium access control (MAC) architecture for a user equipment (UE) in accordance with an exemplary embodiment of the invention.

FIG. 4 is a block diagram illustrating functionality of a MAC entity at the UE in accordance with an exemplary embodiment of the invention.

FIG. 5 is a block diagram illustrating functionality of a MAC entity at the Node B in accordance with an exemplary embodiment of the invention.

### DETAILED DESCRIPTION OF EXEMPLARY EMBODIMENTS

Although the following description of the present invention is based on the Universal Mobile Telecommunications System (UMTS) network infrastructure implementing a next generation Wideband Code Division Multiple Access (W-CDMA) air interface technology, it should be noted that the exemplary embodiments shown and described herein are meant to be illustrative only and not limiting in any way. As such, various modifications will be apparent to those skilled in the art. For example, it will be understood that the present invention finds application to any medium access control protocol with multiple modes in other spread spectrum systems such as CDMA2000 systems.

Where used below, base transceiver station (BTS) and Node-B are synonymous and may describe equipment that provides data connectivity between a packet switched data network (PSDN) such as the Internet, and one or more mobile stations. Additionally where used below, the terms user, user equipment (UE), subscriber, mobile station and remote station are synonymous and describe a remote user of wireless resources in a wireless communication network.

In general, the exemplary embodiments of the present invention introduce a new MAC entity for UMTS, referred to herein as a MAC-EU (enhanced uplink). The MAC-EU is a protocol for enhanced functionalities at the Node B 110 and at the UE 105 to support a new dedicated transport channel referred to as an Enhanced Uplink Dedicated Channel (EU-DCH). The MAC-EU may be at the UE 105, and also at the Node B 110. The MAC-UE is at the Node B 110 so that error control and shared access control functionalities can be performed at the Node B 110 instead of at the RNC 115, in an effort to more quickly respond to fast channel variations. Since uplink data rate varies with time and is dynamically adapted to the radio channel condition of the UE 105, system processing time may be reduced.

The MAC-EU may enable high data rate uplink data (i.e., video, web-browsing traffic, web-casting, etc.) to be mapped from logical channels to a physical channel for transmission in the uplink, so as to account for varied radio channel conditions. A principle behind the EU-DCH is to be able to schedule a specific UE 105 with a relatively good radio channel condition, to send high rate uplink data based on the UE 105's capabilities. Functions of the MAC-EU may include HARQ processing, QoS management, priority handling and buffer management for feedback to the Node B 110 scheduler, transmission mode selection, and sequencing, for example.

### Terms, Acronyms, and Abbreviations

Below are listed various terms, acronyms, and abbreviations employed in this application.
- ASC: Access Service Class
- BCCH: Broadcast Control Channel
- BCH: Broadcast Channel
- C-: Control-
- CCCH: Common Control Channel
- CPCH: Common Packet Channel (UL)
- DCCH: Dedicated Control Channel
- DCH: Dedicated Channel
- DL: Downlink
- DSCH: Downlink Shared Channel
- DTCH: Dedicated Traffic Channel
- EU-DCH: Enhanced Uplink Dedicated Channel
- FACH: Forward Link Access Channel
- FDD: Frequency Division Duplex
- HARQ: Hybrid Automatic Repeat Request
- HS-DSCH: High Speed Downlink Shared Channel
- L1: Layer 1 (physical layer)
- L2: Layer 2 (data link layer)
- L3: Layer 3 (network layer)
- MAC: Medium Access Control
- PCCH: Paging Control Channel
- PCH: Paging Channel
- PDU: Protocol Data Unit
- PHY: Physical layer
- PhyCH: Physical Channels
- RACH: Random Access Channel
- RLC: Radio Link Control
- RNC: Radio Network Controller
- RRC: Radio Resource Control
- SHCCH: Shared Channel Control Channel
- SRNC: Serving Radio Network Controller
- SRNS: Serving Radio Network Subsystem
- TDD: Time Division Duplex
- TFCI: Transport Format Combination Indicator
- TFI: Transport Format Indicator
- TSN: Transmission Sequence Number
- U-: User-
- UE: User Equipment
- UL: Uplink
- UMTS: Universal Mobile Telecommunications System
- USCH: Uplink Shared Channel
- UTRAN: UMTS Terrestrial Radio Access Network

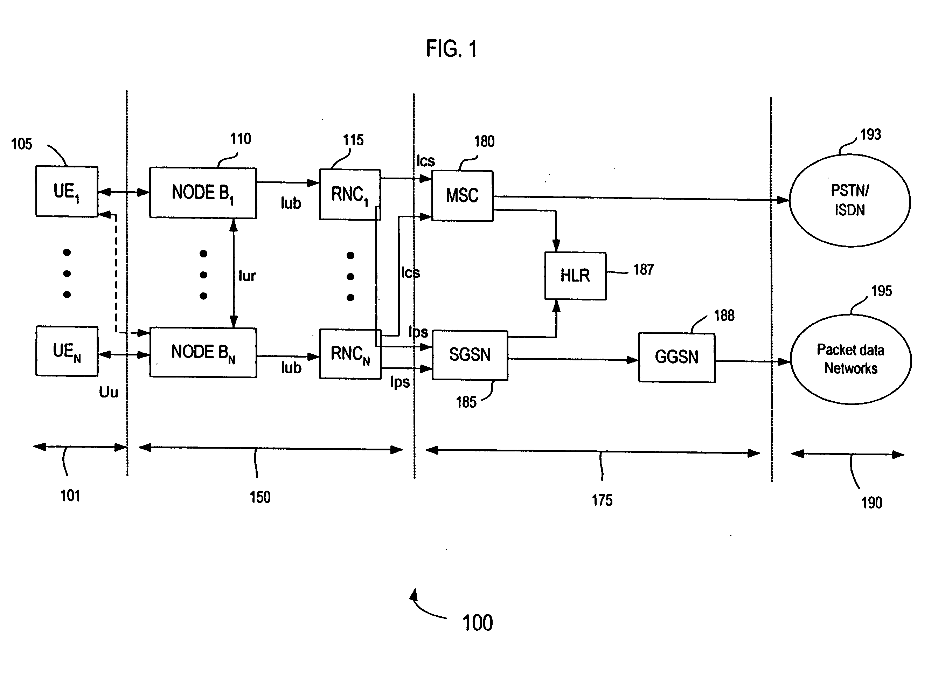

FIG. 1 illustrates a high-level diagram of the UMTS architecture, in accordance with an exemplary embodiment of the invention. Referring to FIG. 1, a UMTS architecture 100 comprises a radio access network part that may be referred to as a UMTS terrestrial radio access network (UTRAN) 150. The UTRAN 150 interfaces over a Uu air interface with a radio interface part 101; namely user equipments (UEs) such as mobile stations. The Uu air interface is the radio interface between the UTRAN 150 and one or more UEs 105. The UTRAN 150 also interfaces with one or more core networks (CNs) 175 (only one being shown in FIG. 1 for simplicity) via interfaces Ics and Ips, for example. Ics, short for Interface Unit (Circuit Switched) interface, is the interface in UMTS which links the RNC with a Mobile Switching Center (MSC). Ips, short for Interface Unit (Packet Switched) interface, is the interface in UMTS which links the RNC with a Serving GPRS Support Node (SGSN). The Uu air interface enables interconnection of Node Bs with UEs, for example.

CN 175 may include mobile switching centers (MSCs) 180, SGSNs 185 and Gateway GPRS serving/support nodes (GGSNs) 188. SGSN 185 and GGSN 188 are gateways to external networks 190. In general in UMTS, SGSNs and GGSNs exchange packets with mobile stations over the UTRAN, and also exchange packets with other internet protocol (IP) networks, referred to herein as "packet data networks". External networks 190 may include various circuit networks 193 such as a packet Switched Telephone Network (PSTN) or Integrated Service Digital Network (ISDN) and packet data networks 195. UTRAN 150 may also be linked to the CN 175 via back-haul facilities (not shown) such as T1/E1, STM-x, etc., for example.

The UTRAN 150 may include cell sites, called Node Bs 110, which may serve a group of UEs 105, generally using a Uu interface protocol. A Node B 110 may contain radio transceivers that communicate using Iub protocol with radio network controllers (RNCs) 115 in UTRAN 150. RNCs 115 within UTRAN 150 may communicate with each other using an Iur protocol, for example. The Iur air interface is a subset of the Iu interface that enables interconnection of RNCs with each other. Several Node Bs 110 may interface with a single RNC 115 where, in additional to call setup and control activity, tasks such as radio resource management and frame selection in soft handoff may be carried out. Node Bs 110 and RNCs 115 may be connected via links that use ATM-based packet transport, for example.

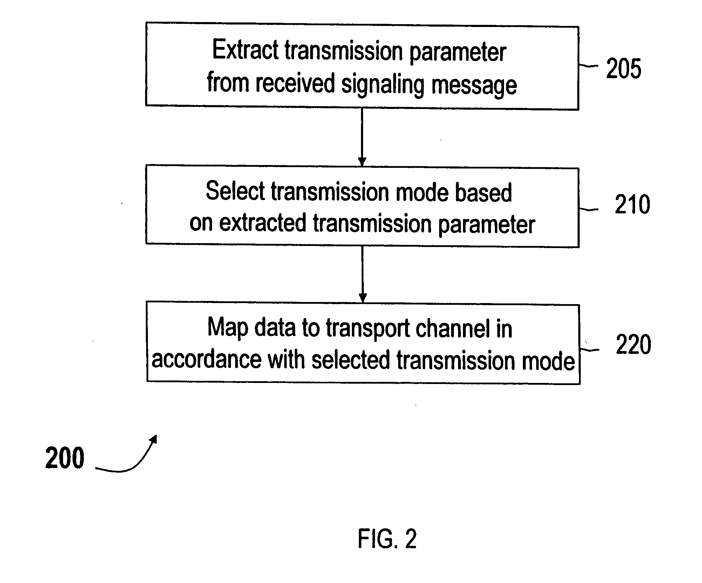

FIG. 2 is a flow diagram illustrating a method of mapping data in accordance with an exemplary embodiment of the invention. Referring to FIG. 2, a method 200 for mapping data, such as high data rate uplink that that resides in a buffer at the UE 105, for example, is described. The MAC-EU at the UE 105 may extract (function 205) a transmission parameter from a received signaling message. The transmission parameter may be a priority indication parameter or a radio channel condition parameter, although other transmission parameters, such as available noise rise, could be extracted. The priority indication parameter may relate to class priority of a service class of data to be transmitted on the uplink. For example, if a video conferencing session is being conducted, the classes of data may be streaming class, interactive or background class and conversational class, with streaming class having the highest priority. In other words, a class of data that has stringent Quality of Service (QoS) requirement (i.e., the streaming class) has a higher priority, demands higher bit error rate (BER) and requires shorter transmission delays and delay variations.

Based on the transmission parameter extracted, a transmission mode for uplink transmission may be selected (function 210) and high data rate uplink data being buffered in the UE 105 may be mapped (function 220) from one or more logical channels to at least one transport channel for uplink transmission in accordance with the selected transmission mode. The transmission modes on the uplink may include at least an autonomous transmission mode and a scheduled transmission mode.

### Traffic Related Architecture - UE 105

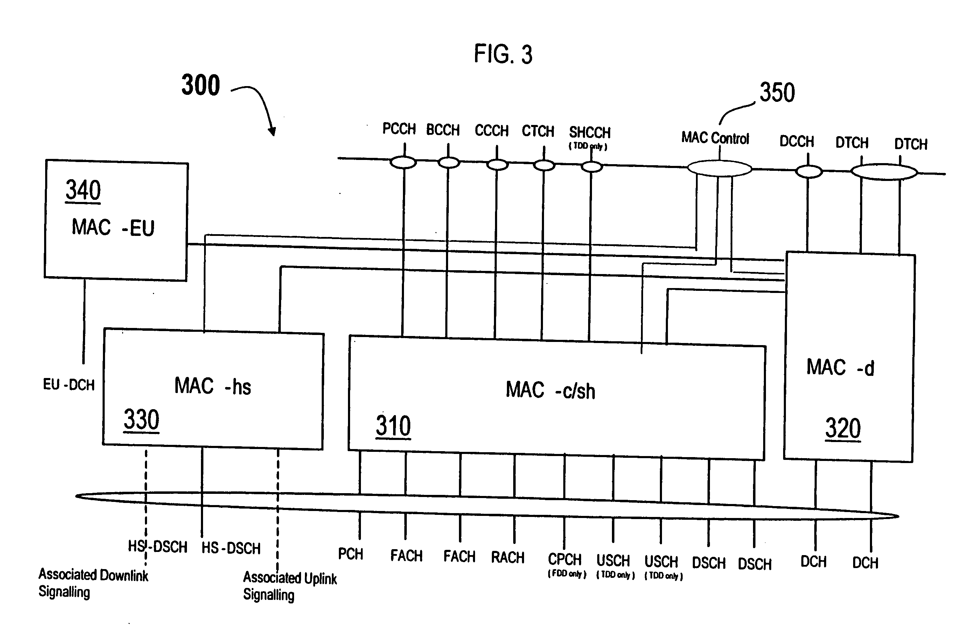

FIG. 3 illustrates medium access control (MAC) architecture for a user equipment (UE) in accordance with an exemplary embodiment of the invention. Referring to FIG. 3, an exemplary UE MAC architecture 300 may be described in terms of different MAC entities from a functional point of view. The MAC entities may be referred to as traffic related architectures that include a MAC-c/sh 310, MAC-d 320, MAC-hs 330 and a MAC-EU 340. In general, the MAC-c/sh 310 is the MAC entity that handles the following transport channels: paging channel (PCH), forward access channel (FACH), random access channel (RACH); common packet channel (UL CPCH), which exists only in FDD mode; downlink shared channel (DSCH); and uplink shared channel (USCH), which exists only in TDD mode. The MAC-d 320 is the MAC entity that handles the dedicated transport channel (DCH), and the MAC-hs 330 is the MAC entity that handles the high speed downlink shared channel (HS-DSCH). Further, Fig. 3 is provided to illustrate a design for a medium access control (MAC) protocol, MAC-EU 340, for enhanced uplink dedicated channel (EU-DCH) transmission.

The exact functions completed by the entities may be different in the UE 105 from those completed in the UTRAN 150. When a UE 105 is allocated resources for exclusive use by the bearers that it supports the MAC-d entities (at UE 105 and UTRAN 150) dynamically share the resources between the bearers and are responsible for selecting the TFI/TFCI that is to be used in each transmission time interval (TTI).

Accordingly, FIG. 3 illustrates the connectivity of MAC entities in UE MAC architecture 300. The MAC-c/sh 310 controls access to all common transport channels; except the HS-DSCH transport channel. The MAC-d 320 controls access to all dedicated transport channels, with the exception of an EU-DCH (described in further detail below) to MAC-c/sh 310 and MAC-hs 330; and the MAC-hs 330 controls access to the HS-DSCH transport channel. MAC-EU 340 has similar functionality to MAC-hs 330, but includes additional functionality as described below.

In the downlink, if logical channels of a dedicated type are mapped to common transport channels, then MAC-d 320 receives the data from MAC-c/sh or MAC-hs via the illustrated connection between the functional entities. In the uplink, if logical channels of dedicated type are mapped to common transport channels then MAC-d 320 submits the data to MAC-c/sh via the illustrated connection between the functional entities.

The mapping of logical channels on transport channels depends on the multiplexing that is configured by RRC. The MAC Control 350 is used to transfer Control information to each MAC entity, with the exception of MAC-EU 340, as it has a one to one correlation with MAC-d 320. The associated signaling shown in FIG. 3 illustrates the exchange of information between layer 1 and layer 2 provided by certain primitives. A discussion of the primitives are not a focus of the present invention, but are described in detail in the most recent version of 3GPP Technical Specification 25.302, entitled, "Services provided by the Physical Layer".

### MAC-c/sh 310

A transport channel transport format multiplexer (TCTF MUX) function represents the handling (insertion for uplink channels and detection and deletion for downlink channels) of the TCTF field in the MAC header, and the respective mapping between logical and transport channels. The TCTF field indicates the common logical channel type, or if a dedicated logical channel is used. An add/read UE Id function may be performed, where the UE Id is added for CPCH and RACH transmissions. The UE Id, when present, identifies data to this UE 105. Additionally, MAC-c/sh 310 includes transport format (TF) selection., since in the uplink, the possibility of transport format selection exists. In the case of CPCH transmission, a TF is selected based on TF availability determined from status information on the CPCH Status Indication Channel (CSICH). MAC-c/sh 310 includes Access Service Class (ASC) selection. For RACH, MAC indicates the ASC associated with the PDU to the physical layer. For CPCH, MAC may indicate the ASC associated with the PDU to the Physical Layer. This is to ensure that RACH and CPCH messages associated with a given Access Service Class are sent on the appropriate signature(s) and time slot(s). MAC also applies appropriate back-off parameter(s) associated with the given ASC.

MAC-c/sh 310 further includes functionality for Scheduling /priority handling and Transport Format Combination (TFC) selection. Scheduling /priority handling functionality may be used to transmit information received from MAC-d 320 on RACH and CPCH based on logical channel priorities. This function is related to TF selection. Transport format and transport format combination selection according to the transport format combination set (or transport format combination subset) configured by the RRC may be performed by MAC-c/sh 310. The RLC provides RLC-PDUs to the MAC, which fit into the available transport blocks on the transport channels. There may be one MAC-c/sh entity in each UE 105.

### MAC-d 320

The MAC-d 320 is responsible for mapping dedicated logical channels for the uplink either onto dedicated transport channels or to transfer data to MAC-c/sh 310 to be transmitted via common channels. One dedicated logical channel can be mapped simultaneously onto DCH and DSCH. One dedicated logical channel can be simultaneously mapped onto DCH and HS-DSCH. The MAC-d 320 has a connection to the MAC-c/sh 310. This connection is used to transfer data to the MAC-c/sh 310, to transmit data on transport channels that are handled by MAC-c/sh 310 (uplink) or to receive data from transport channels that are handled by MAC-c/sh 310 (downlink). The MAC-d 320 has a connection to the MAC-hs 330. This connection is used to receive data from the HS-DSCH transport channel which is handled by MAC-hs 330 (downlink). There may be at least one MAC-d 320 in the UE 105.

The MAC-d 320 may perform the following functionality. Transport Channel type switching may be performed by this entity, based on a decision taken by RRC, which is related to a change of radio resources. If requested by RRC, MAC shall switch the mapping of one designated logical channel between common and dedicated transport channels. A control/transport (C/T) MUX protocol element may be used when multiplexing of several dedicated logical channels onto one transport channel (other than HS-DSCH) or when one MAC-d 320 flow (HS-DSCH) is used. An unambiguous identification of the logical channel may be included. Ciphering for transparent mode data to be ciphered may be performed in MAC-d 320. Deciphering for ciphered transparent mode data may also be performed in MAC-d 320. The ciphering and deciphering functions are not described in detail for convenience, as they are not of focus in the present invention. However, these functions may be implemented as described in the most recent version of the 3GPP Technical Specification 33.102, entitled "Security Architecture", for example. Further in accordance with the exemplary embodiments, the MAC-d 320 does not perform a TFC function, as this function is taken over by the MAC-EU 340, as described below.

### MAC-hs 330

The MAC-hs 330 handles HSDPA-specific functions, and may include HARQ, Reordering Queue distribution, Reordering and Disassembly functions. The HARQ entity may be responsible for handling the MAC functions relating to the HARQ protocol. The HARQ functional entity handles all the tasks that are required for hybrid ARQ, and is responsible for generating ACKs or NACKs. The detailed configuration of the hybrid ARQ protocol may be provided by RRC over the MAC-Control 350, also known as a MAC Control Special Access Point (SAP), for example. The reordering queue distribution function routes the MAC-hs PDUs to the correct reordering buffer based on the Queue ID.

The reordering entity reorders received MAC-hs PDUs according to the received transmission sequence number (TSN). MAC-hs PDUs with consecutive TSNs may be delivered to the disassembly function upon reception. MAC-hs PDUs are not delivered to the disassembly function if MAC-hs PDUs with lower TSNs are missing. There may be at least one reordering entity for each Queue ID configured at the UE 105. The disassembly entity may be responsible for the disassembly of MAC-hs PDUs. When a MAC-hs PDU is disassembled, the MAC-hs header is removed, the MAC-d PDUs are extracted and any present padding bits are removed. Then the MAC-d PDUs are delivered to the higher layer (OSI Layers 3-7).

### MAC-EU 340

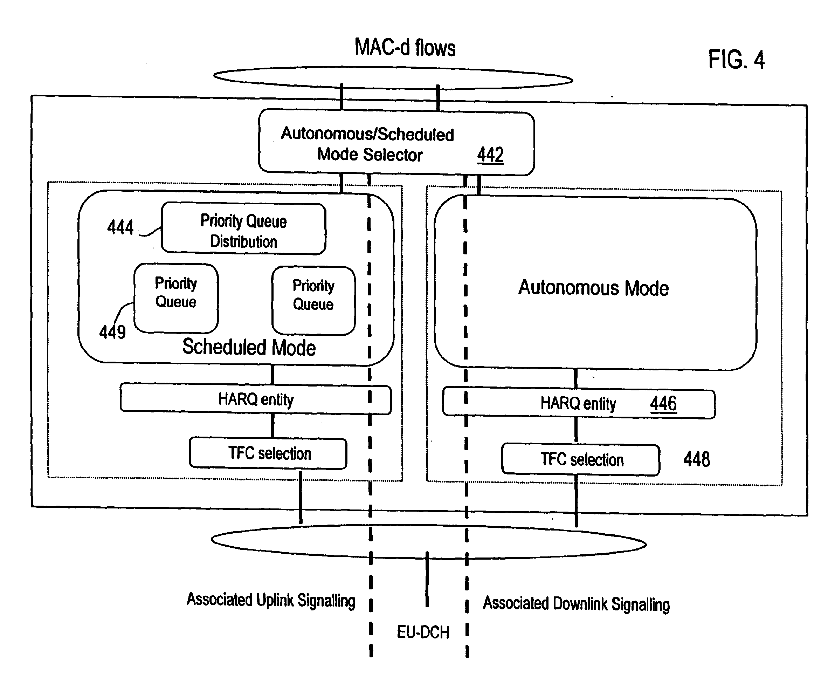

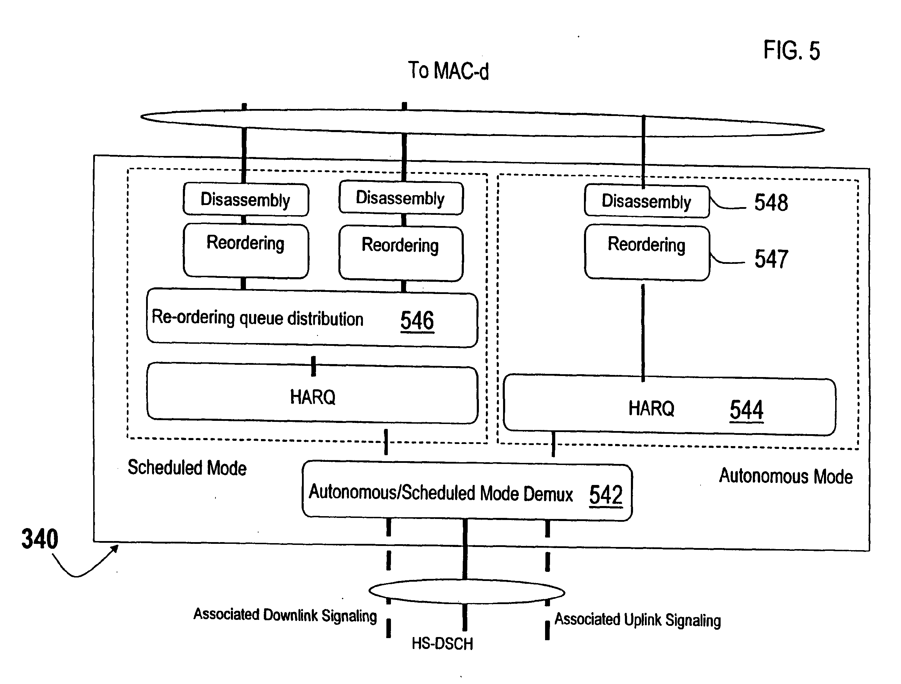

The exemplary embodiments of the present invention introduce a MAC entity called Medium Access Control Enhanced Uplink (MAC-EU). A MAC-EU 340 may be in UE 105 and in the UTRAN 150 at Node B 110. MAC-EU functionality is now briefly described at the UE 105 and Node B 110, and described in further detail below with reference to FIGS. 4 and 5

As discussed above, a MAC-EU 340 may be located in the Node B 110 to allow the Node B 110 to quickly schedule a UE 105 having the best channel conditions, in an effort to ensure a largest achievable throughput in the uplink. At the output of the UE-side MAC-EU 340, a new Enhanced Uplink Dedicated Channel (EU-DCH) or HS-DCH (High Speed DCH) transport channel may be submitted to the lower layer (Layer 1). At the input to the MAC-EU 340 at a UE 105, a MAC-d flow may be received from the MAC-d 320. Additionally, the UE-side MAC-EU 340 may include a dynamic mode selector function, such as an Autonomous/Scheduled Mode Selector function, which manages EU-DCH resources between an autonomous transmission mode and a scheduled transmission mode, and which manages HARQ entities and data flows according to their class priority. Based on status reports from associated downlink signaling, either new transmission or retransmission is determined.

Both the UE-side and Node B-side MAC-EU's 340 may include a HARQ entity to operate and control HARQ transmission and reception, respectively. Additionally, the UE-side MAC-EU 340 may include a transport format combination (TFC) selection function. Instead of being performed at the MAC-d 320, this function may reside in the MAC-EU 340 at UE 105. Including the TFC selection in the MAC-EU 340 may allow substantially close coordination with the HARQ entity in the MAC-EU 340.

Moreover, two types of signaling messages may be introduced. The first signaling message may be referred to as a downlink schedule_notify message that is sent by the Node B 110 to the UE 105 to inform the UE 105 of its transmission opportunity in a scheduled mode transmission, for example. A termination point of the schedule_notify message may be the corresponding MAC-EU entities in the UE 105 and Node B 110. Other types of the downlink control signaling messages to associate with different transmission modes are also foreseen in accordance with the exemplary embodiments of the present invention. The second signaling message may be an uplink priority_indicate message sent by the UE 105 to the Node B 110 to inform the Node B 110 of the priority of data available for uplink transmission at the UE 105. Termination points of this priority_indicate message may be at the corresponding MAC-EU entities in both sides, for example. Other uplink control signaling messages, such as queue length of the priority class, and residual delay of each service class, may be possible to activate the scheduled transmission mode, a rate control transmission mode, and other designed transmission modes.

FIG. 4 is a block diagram illustrating functionality of a MAC entity at the UE in accordance with an exemplary embodiment of the invention. The MAC-EU 340 may include an Autonomous/Scheduled mode Selector function 442, priority queue distribution function 444, HARQ function 446, and TFC function 448. This is only one possible configuration of the MAC-EU 340 at the UE 105 side, as other configurations consistent with the functions below may also be realized. In either scheduled mode or autonomous mode, shown as dotted line boxes in FIG. 4, HARQ processing and TFC selection will be performed. In the scheduled mode, priority queue distribution function 444 is performed and priority queues 449 are maintained.

The Autonomous/Scheduled Mode Selector function 442 manages EU-DCH resources between an autonomous transmission mode and a scheduled transmission mode. The transmission mode selected may depend on the extracted transmission parameter, as discussed above. The priority queue distribution function 444 distributes the incoming traffic (data flows) from MAC-d 320 to its associated priority queue 449. Each priority queue 449 has its own QoS index as a reference for the dynamic transmission mode selection at Autonomous/Scheduled Mode Selector function 442.

The HARQ function 446 may be responsible for handling the MAC functions relating to the HARQ protocol. The HARQ function 446 handles all the tasks that are required for hybrid ARQ, and similar to the HARQ entity in the MAC-hs 330, may be responsible for generating ACKs or NACKs. The HARQ function 446 may also keep track of the status of active set Node B 110s in soft handoff with UE 105. Multiple destinations exist for HARQ in EU-DCH during soft handoff situations. Previous implementation of HARQ in HSDPA focused on a single source-destination scenario. With multiple receivers, there may be multiple ACKs/NACKs that are being sent from each of the receivers or Node B 110s to the UE 105. The operation of the HARQ function 446 in the UE 105 considers the impact of these multiple ACK/NACKs on the robustness of the HARQ protocol, and performance impact of the additional signaling that may be required. In addition, different Node B 110s could have different status, i.e. erroneous combining of new packet with previous packet. To protect against such protocol errors, the state machine of the HARQ function 446 may be synchronized.

The MAC-EU 340 includes TFC function 448. Transport format and transport format combination selection according to the transport format combination set (or transport format combination subset) configured by the associated signaling, such as RRC signaling in the call setup, downlink control signaling in the scheduled mode or rate control mode, etc., may be performed by MAC-EU 340. The RLC provides RLC-PDUs to the MAC, which fit into the available transport blocks on the EU-DCH. The associated uplink and downlink signaling in FIG. 4 provide required control parameters for each transmission mode and the communication between UE and Node B.

FIG. 5 is a block diagram illustrating functionality of a MAC entity at the Node B 110 in accordance with an exemplary embodiment of the invention. A MAC-EU 340 on the Node B 110 side may include an Autonomous/Scheduled mode Demultiplexer function 542, HARQ function 544, reordering queue distribution function 546, reordering function 547 and disassembly function 548. The reordering function 547 and disassembly function 548 may collectively be referred to as a 'regrouping function' which regroups the data according to its service class. This is only one possible configuration of the MAC-EU at the Node B 110 side, as other configurations consistent with the functions below may also be realized.

In general the functions of the MAC-EU 340 at the Node B 110 perform operations that are the reverse of the MAC-EU 340 at the UE 105. The Autonomous/Scheduled mode Demultiplexer function 542 de-multiplexes the multiple transmission mode integrated data traffic, and segregates the data into its associated transmission mode, such as autonomous mode and scheduled mode, for example. There is a HARQ function 544 for each mode, scheduled or autonomous. The HARQ function 546 from each mode (at the Node B 110) may obtains data or packets from a central buffer pool (not shown), allowing the flexibility of different priorities of data (priority different based o service class of data) to be sent using either transmission mode at the time of transmission. High data rate uplink data that has been sent in one mode may be given the flexibility to be sent in a different mode during the retransmissions. The different Node B 110 controlled scheduling modes (autonomous, scheduled) may be controlled using a single or individual HARQ entity. Using separate HARQ processes allows independent operation of the two different modes e.g. the HARQ operation for the scheduled and autonomous modes could be operated with different transmission attributes different scheduling algorithm, coding rate and modulation, etc.

The re-ordering queue distribution function 546 at the Node B 110 collects the output of HARQ of each transmission mode and distributes the output to the associated priority class. The reordering function 547 associates with each priority class. The reordering function 547 rearranges the packet of the same priority class to a different application class in sequence.

The disassembly function 548 is similar to those performed in the MAC-hs 330. MAC-EU PDUs with consecutive TSNs may be delivered to the disassembly function 548 upon reception. MAC-EU PDUs are not delivered to the disassembly function 548 if MAC-hs PDUs with lower TSNs are missing. There may be at least one reordering function 547 for each Queue ID configured at the UE 105. The disassembly function 548 may be responsible for the disassembly of MAC-EU PDUs. When a MAC-EU PDU is disassembled, the MAC-EU header is removed, the MAC-d PDUs (data flows received from MAC-d 320) are extracted and any present padding bits are removed. Then the MAC-d PDUs are delivered to the higher layer (OSI Layers 3-7). The associated uplink and downlink signaling are the control parameters to communicate between the MAC-EU 340 at the UE 105 and MAC-EU 340 at the Node B 110. The given control parameters assists the operation of the MAC-EU 340 operation at the Node B 110.

Having the MAC-EU 340 at the Node B 110 may therefore avoid the latency involved in relaying the ACK or NACK to the RNC 115. At the same time, by processing the ACK/NACK at the Node B 110, retransmissions by the UE 105 can be scheduled sooner, and hence, may possibly exploit favorable channel conditions.

The exemplary embodiments of the invention being thus described, it will be obvious that the same may be varied in many ways. Such variations are not to be regarded as departure from the spirit and scope of the exemplary embodiments of the invention, and all such modifications as would be obvious to one skilled in the art are intended to be included within the scope of the following claims.

## Claims

1. A method of mapping data for uplink transmission in a communication system, comprising:
mapping data to a transport channel for uplink transmission in accordance with a selected transmission mode for uplink transmission.

2. The method of claim 1, further comprising:
selecting one of a plurality of selectable transmission modes for uplink transmission based on a given transmission parameter.

3. The method of claim 2, wherein said selecting includes selecting at least one of an autonomous transmission mode and a scheduled transmission mode to transmit high data rate data on the uplink.

4. The method of claim 2, wherein said selecting further includes managing hybrid Automatic Repeat request (HARQ) transmission and reception and flow of high data rate data according to the class priority of the high data rate data.

5. The method of claim 2, further comprising:
extracting said transmission parameter from one of an uplink signaling message and a downlink signaling message, wherein
said uplink signaling message includes information informing a Node B of the priority of data available for uplink transmission at a user equipment, and
said downlink signaling message includes information informing a user equipment of a transmission opportunity.

6. The method of claim 1, wherein
the mapped data is transmitted as a new transmission or a retransmission based on a received downlink signaling response message, and
the received downlink signaling response message is one of an acknowledgment (ACK) and a negative acknowledgment (NACK) in response to an uplink signaling message

7. A method of mapping data for uplink transmission in a communication system, comprising:
extracting at least one transmission parameter from a received signaling message;
selecting one of a plurality of selectable transmission modes for uplink transmission based on the extracted transmission parameter; and
mapping data to a transport channel for uplink transmission in accordance with the selected transmission mode.

8. The method of claim 7, wherein said selecting includes dynamically selecting at least one of an autonomous transmission mode and a scheduled transmission mode to transmit high data rate data on the uplink.

9. The method of claims 5 or 7, wherein said extracting further includes extracting one of a priority indication parameter and a radio channel condition from the signaling message, said priority indication parameter relating to class priority of a service class of data to be transmitted on the uplink.

10. The method of claims 5 or 7, wherein
said mapping further includes mapping high date rate data on logical channels in a MAC layer to transport channels in a physical layer for transmission on the uplink.
